# EUROPÄISCHE PATENTANMELDUNG

(11) **EP 4 253 041 A1**
(43) Veröffentlichungstag der Anmeldung: **04.10.2023**
(21) Anmeldenummer: 22165276.1
(22) Anmeldetag: 29.03.2022
(51) Int. Cl.: B32B 15/01, C22C 21/02, B23K 35/02, B23K 35/28

(54) **VERBUNDWERKSTOFF UND VERFAHREN ZUR HERSTELLUNG DIESES VERBUNDWERKSTOFFS**

(71) Anmelder: AMAG rolling GmbH, 5282 Braunau am Inn - Ranshofen (AT)
(72) Erfinder: Morak, Petra, 5282 Ranshofen (AT); Hanko, Gerhard, 84359 Simbach am Inn (DE)
(74) Vertreter: Jell, Friedrich

(57) **Zusammenfassung**

Es wird ein Verbundwerkstoff und ein Verfahren zur Herstellung dieses Verbundwerkstoffs mit einer Trägerschicht aus einer Aluminiumknetlegierung und mit einer ein- oder beidseitig auf der Trägerschicht vorgesehenen, außenliegenden Lotschicht aus einer Aluminiumlotlegierung gezeigt, wobei die Lotschicht an deren Oberfläche (O) teilweise freiliegende Siliziumpartikel (1a) aufweist, die einen ersten Flächenanteil an der Gesamtfläche der Oberfläche (O) der Lotschicht ausbilden. Um standfest eine flussmittelfrei Lötbarkeit sicherzustellen, wird vorgeschlagen, dass die Lotschicht eine gewalzte Oberfläche (O) und deren Aluminiumlotlegierung mindestens 0,1 Gew.-% Bismut (Bi) aufweist, wobei der erste Flächenanteil größer 2,5 % ist.

## Beschreibung

Die Erfindung betrifft ein Verfahren zur Herstellung eines Verbundwerkstoffs und diesen Verbundwerkstoff, insbesondere plattiertes Blech oder plattiertes Band, mit einer Trägerschicht aus einer Aluminiumknetlegierung und mit einer auf einer oder beiden Flachseiten der Trägerschicht vorgesehenen, außenliegenden Lotschicht aus einer Aluminiumlotlegierung, wobei die Lotschicht an ihrer Oberfläche teilweise freiliegende Siliziumpartikel aufweist, die einen ersten Flächenanteil an der Gesamtfläche der Oberfläche der Lotschicht ausbilden.

Für ein flussmittelfreies CAB-Löten (Löten in kontrollierter Atmosphäre) ist aus der EP2844466B1 ein Verbundwerkstoff mit einer Trägerschicht bzw. Kernschicht aus einer AA 3003-Aluminiumknetlegierung und mit einer Lotschicht aus einer AlSi12-Aluminiumlotlegierung bekannt, welche Lotschicht an der Oberfläche teilweise freiliegende Siliziumpartikel aufweist. Zur Erzeugung dieser Siliziumpartikel an der Oberfläche wird nach einem Kaltwalzen des fertiggewalzten Verbundwerkstoffs dessen Lotschicht alkalisch gebeizt. Dies raut aber auch die gewalzte Oberfläche der Lotschicht vergleichsweise stark auf.

Nachteilig führen diese vergleichsweise abrasiv wirkenden Siliziumpartikel an der Oberfläche in Kombination mit der erhöhten Oberflächenrauigkeit zu einem erhöhten Werkzeugverschleiß an einem Blechbearbeitungswerkzeug, beispielsweise Stanzwerkzeug, mit dem der Verbundwerkstoff auf das Löten in den Abmessungen vorbereitet wird.

Die Erfindung hat sich daher die Aufgabe gestellt, einen Verbundwerkstoff der eingangs geschilderten Art, derart zu verändern, dass dieser trotz einer flussmittelfreien Lötbarkeit mechanischen Trennverfahren verschleißarm unterworfen werden kann. Die Erfindung löst die gestellte Aufgabe hinsichtlich des Verbundwerkstoffs durch die Merkmale des Anspruchs 1.

Indem die Lotschicht eine gewalzte Oberfläche aufweist, kann sichergestellt werden, dass die an der Oberfläche teilweise freiliegenden Siliziumpartikel höchstens bis zu jener von der umgebenden Aluminiummatrix gebildeten Bezugsebene vorstehen. Eine abrasive Wirkung der Siliziumpartikel auf ein Trennwerkzeug ist daher dementsprechend reduziert, insbesondere weil sich solch eine gewalzte Oberfläche auch mit dementsprechend reduzierten Kennwerten zur Rauigkeit auszeichnen kann. Der erfindungsgemäße Verbundwerkstoff (beispielsweise in Form eines Blechs oder Bands) kann sich aber nicht nur durch eine verschleißarme Verarbeitung bzw. Weiterverarbeitung mit mechanischen Trennverfahren auszeichnen, sondern auch dessen flussmittelfreie Verlötbarkeit bleibt erhalten. Dies, indem die Lotschicht eine gewalzte Oberfläche und deren Aluminiumlotlegierung mindestens 0,1 Gew.-% Bismut (Bi) aufweisen, wobei der erste Flächenanteil größer 2,5 % ist. Damit ist ein flussmittelfrei verlötbarer Verbundwerkstoff gegeben, der in jener Weise für das Löten vorbereitet werden kann, welche von anderen Verbundwerkstoffen bekannt ist, welche jedoch nicht flussmittelfrei verlötet werden können.

Als ausreichend für die gewünschte flussmittelfreie Verlötung kann sich herausstellen, wenn der erste Flächenanteil kleiner 25 % ist. Dabei kann trotz freiliegender Siliziumpartikel der Werkzeugverschleiß in einem geringem Maß gehalten werden - dies umso mehr, wenn der erste Flächenanteil kleiner 20 % oder -beispielsweise- kleiner 12 % ist.

Vorzugsweise liegt der erste Flächenanteil im Bereich von 3 bis 10 %. Insbesondere kann sich ab einer unteren Grenze von 3 % der Lötprozess und somit das Lötergebnis bereits deutlich verbessern. Bis zu der oberen Grenze von 10 % kann der Werkzeugverschleiß vergleichsweise niedrig bleiben, was den Wartungsaufwand an den, das Blech oder Band weiterverarbeiten Werkzeugen gering hält.

Weist die Aluminiumlotlegierung bis 0,40 Gew.-% Bismut (Bi) auf, ist die Benetzbarkeit zwischen dem aufgeschmolzenem Lotmaterial und dem zu verbindenden Werkstoff deutlich verbesserbar. Dies wiederum erlaubt geringfügig höhere Spaltmaße, welche jedoch von erheblicher Bedeutung für das resultierende Lötergebnis sein können.

Eine verschleißarme Werkzeugbearbeitung des Verbundwerkstoffs kann beispielsweise daran erkannt werden, dass die gewalzte Oberfläche (O) der Lotschicht einen Glanzwert gemäß DIN EN ISO 2813:2014 von mindestens 50 GU, gemessen in einem Winkel von 60° und quer zur Walzrichtung, aufweist. Vorzugsweise ist der Glanzwert gemäß DIN EN ISO 2813:2014 größer als 60 GU. Beispielsweise kann zu dieser Messung ein Messgerät mit der Bezeichnung "micro-TRI-gloss S" der Firma BYK-Gardner GmbH verwendet werden.

Die gewalzte Oberfläche weist in eine Aluminiummatrix der Lotschicht eingedrückte Siliziumpartikel auf, die durch den Walzprozess in der Aluminiummatrix verankert werden. Diese eingedrückten Siliziumpartikel führen zu einer Anreicherung von Silizium an der Oberfläche der Lotschicht, welche wiederum zu einer Verbesserung des Aufschmelzvermögens während des Lötens führt. Damit kann die Flussmittelfreiheit beim Löten des Verbundwerkstoffs selbst nach einem Umformen mit vergleichsweise hohen Umformgraden garantiert werden, was dem Verbundwerkstoff eine universelle Verwendbarkeit eröffnet.

Ein Verschleiß von Werkzeugen bei der Weiterverarbeitung des Blechs oder Bands kann weiter reduziert werden, wenn die Aluminiummatrix der Lotschicht an der gewalzten Oberfläche ein Bezugsprofil am Rauheitsprofil der gewalzten Oberfläche ausbildet, wobei die an der gewalzten Oberfläche teilweise freiliegenden Siliziumpartikel diesem Bezugsprofil nicht vorspringen.

Vorzugsweise befinden sich die Siliziumpartikel in Vertiefungen an der gewalzten Oberfläche. Beispielsweise umläuft jeweils eine Vertiefung zumindest bereichsweise, insbesondere vollständig, ein oder mehrere Siliziumpartikel. Dies unterbricht den ebenen Verlauf der Oxidschicht über die Oberfläche der Aluminiummatrix und erleichtert dessen Aufbruch beim flussmittelfreien Löten. Damit kann sich beispielsweise die Handhabung des Verbundwerkstoffs beim Löten, insbesondere beim Verlöten ohne Flussmittel, weiter vereinfachen.

Vorzugsweise weist die Aluminiumlotlegierung von 6,8 bis 13 Gew.-% Silizium (Si), von 0,1 bis 0,40 Gew.-% Bismut (Bi) und von 0,10 bis 0,40 Gew.-% Magnesium (Mg) auf. Bevorzugt kann die Aluminiumlotlegierung von 8,5 bis 12 Gew.-% Silizium (Si) aufweisen. Bevorzugt kann die Aluminiumlotlegierung von 0,1 bis 0,3 Gew.-% Bismut (Bi) aufweisen. Bevorzugt kann die Aluminiumlotlegierung von 0,2 bis 0,35 Gew.-% Magnesium (Mg) aufweisen.

Optional einzeln oder in Kombination kann die Aluminiumlotlegierung aufweisen:
bis 1,2, insbesondere bis 0,3 Gew.-% Zink (Zn)
bis 0,6, insbesondere bis 0,5, Gew.-% Eisen (Fe)
bis 0,2 Gew.-% Titan (Ti)
bis 0,2, insbesondere bis 0,1, Gew.-% Mangan (Mn)
bis 0,2, insbesondere bis 0,1, Gew.-% Kupfer (Cu)
bis 0,03%, insbesondere bis 0,02%, Gew.-% Strontium (Sr)
bis 0,2, insbesondere bis 0,1, Gew.-% Zinn (Sn)
bis 0,2 Gew.-%, insbesondere bis 0,1, Gew.-% Antimon (Sb)

Als Rest weist die Aluminiumlotlegierung Aluminium sowie herstellungsbedingt unvermeidbare Verunreinigungen mit jeweils maximal 0,05 Gew.-% und gesamt höchstens 0,15 Gew.-% auf.

Vorzugsweise ist in der Aluminiumlotlegierung das Verhältnis der Gew.-% von Magnesium (Mg) zu Bismut (Bi) kleiner gleich 4. Dies kann beispielsweise unerwünschte Abscheidungen am Lötofen vermeiden. Liegt das Verhältnis im Bereich von 0,5 bis 2,7, kann sich dies besonders vorteilhaft beim Löten auf ein Aufbrechen der Aluminiumoxidschicht auswirken. Insbesondere kann auch mit diesem Bereich erreicht werden, dass das Lot ausreichend fließfähig ist.

Vorzugsweise weist die Aluminiumknetlegierung von 0 bis 1,6 Gew.-% Mangan (Mn), von 0 bis 0,90 Gew.-% Kupfer (Cu) und von 0,05 bis 1,0 Gew.-% Silizium (Si) auf. Bevorzugt kann die Aluminiumknetlegierung von 0,8 bis 1,4 Gew.-% Mangan (Mn) aufweisen. Bevorzugt kann die Aluminiumknetlegierung von 0,05 bis 0,6 Gew.-% Kupfer (Cu) aufweisen. Bevorzugt kann die Aluminiumknetlegierung von 0,05 bis 0,6 Gew.-% Silizium (Si) aufweisen.

Optional einzeln oder in Kombination kann die Aluminiumknetlegierung aufweisen:
bis 0,60, insbesondere bis 0,45 Gew.-% Eisen (Fe)
bis 0,8, insbesondere bis 0,6, Gew.-% Magnesium (Mg)
bis 0,15, insbesondere bis 0,10, Gew.-% Zink (Zn)
bis 0,20 Gew.-% Titan (Ti)

Als Rest weist die Aluminiumknetlegierung Aluminium sowie herstellungsbedingt unvermeidbare Verunreinigungen mit jeweils maximal 0,05 Gew.-% und gesamt höchstens 0,15 Gew.-% auf.

Beispielsweise ist die Aluminiumknetlegierung zur Erreichung der erfindungsgemäßen Vorteile eine Aluminiumlegierung vom Typ EN AW-1xxx, EN AW-3xxx, EN AW-5xxx oder EN AW-6xxx.

Die Erfindung löst die gestellte Aufgabe hinsichtlich des Verfahrens zur Herstellung des Verbundwerkstoffs durch die Merkmale des Anspruchs 13.

Bekanntermaßen kann der Verbundwerkstoff durch Kaltwalzen auf die finale Dicke (Enddicke) reduziert werden. Dieses Kaltwalzen beim Blech oder Band (Blechband oder auch Metallband bezeichnet) kann genutzt werden, an der Lotschicht eine gewalzte Oberfläche zu erzeugen. Eine Erhöhung des ersten Flächenanteils von an der Oberfläche der Lotschicht freiliegenden Siliziumpartikeln wird erfindungsgemäß dadurch erreicht, dass der Verbundwerkstoff einem Kaltwalzen mit mindestens einem Kaltwalzstich unterworfen wird, wobei vor einem Kaltwalzstich des mindestens einen Kaltwalzstichs die Oberfläche der Lotschicht einer Beizbehandlung mit einer, insbesondere alkalischen, Beize unterworfen wird. Damit kann reproduzierbar eine Siliziumpartikel aufweisende Oberfläche mit dennoch geringer Rauigkeit geschaffen werden.

Beispielsweise kann die die Beizbehandlung zwischen zwei Kaltwalzstichen des Kaltwalzens erfolgen, wenn das Kaltwalzen mehrere Kaltwalzstiche umfasst.

Ein vergleichsweise hoher ersten Flächenanteils von an der Oberfläche der Lotschicht freiliegenden Siliziumpartikel kann erreicht werden, wenn unmittelbar vor dem letzten Kaltwalzstich des Kaltwalzens erfolgt.

Vorzugsweise kann die Beizbehandlung zwischen zwei Kaltwalzstichen des Kaltwalzens und/oder unmittelbar vor dem letzten Kaltwalzstich des Kaltwalzens erfolgen, um das Verfahren handhabungsfreundlicher auszugestalten.

Vorzugsweise wird eine Beize mit einem pH-Wert im Bereich von 11,0 bis 14,0 verwendet. Bereits als ausreichend für den gewünschten ersten Flächenanteil kann sich eine Beize mit einem pH-Wert im Bereich von 12 bis 13,5 herausstellen. Vorzugsweise kann die Beizdauer im Bereich von 15 bis 300 Sekunden liegen, um damit eine ausreichend hohe Anzahl an Siliziumpartikel an der Oberfläche freilegen zu können, die dennoch mit der Aluminiummatrix ausreichenden fest verbunden sind. Bereits als ausreichend kann eine Beizdauer im Bereich von 30 bis 90 Sekunden sein.

Liegt die Beiztiefe beispielsweise im Bereich von 1 bis 7 µm, kann durch Abtragen der die Siliziumpartikel umgegebenen Aluminiummatrix eine ausreichend hohe Anzahl an Siliziumpartikel freigelegt werden.

Vorzugsweise weist die alkalische Beize eine Natronlauge mit einer Konzentration im Bereich von 8 bis 16 % Gew.-% auf, um für einen ausreichenden Beizangriff zu sorgen.

Der nach dem erfindungsgemäßen Verfahren hergestellte erfindungsgemäße Verbundwerkstoffs kann sich insbesondere zum flussmittelfreien, thermischen Fügeverfahren, insbesondere Löten, vorzugsweise unter Schutzgas, eignen. Insbesondere kann das Fügeverfahren auch unter Atmosphärendruck nach DIN ISO 2533 (1013,25 hPa) stattfinden.

In den Figuren ist der Erfindungsgegenstand beispielsweise näher dargestellt. Es zeigen
Fig. 1a eine Draufsicht auf einen ersten Verbundwerkstoff A ohne Beizbehandlung,
Fig. 1b eine Draufsicht auf einen zweiten Verbundwerkstoff B mit einer Beizbehandlung nach dem Kaltwalzen,
Fig. 1c eine Draufsicht auf einen dritten Verbundwerkstoff C mit einer Beizbehandlung vor dem letzten Kaltwalzstich,
Fig. 1d eine Draufsicht auf einen vierten Verbundwerkstoff D mit einer Beizbehandlung vor dem letzten Kaltwalzstich,
Fig. 1e eine Draufsicht auf einen fünften Verbundwerkstoff E mit einer Beizbehandlung vor dem letzten Kaltwalzstich,
Fig. 1f eine Draufsicht auf einen sechsten Verbundwerkstoff F mit einer Beizbehandlung vor dem letzten Kaltwalzstich,
Figuren 2a bis 2f Darstellungen zu einem jeweiligen ersten Flächenanteil von freiliegenden Siliziumpartikeln der Verbundwerkstoffe A, B, C, D, E und F der Figuren 1a bis 1f,
Fig. 3a eine vergrößerte Draufsicht auf ein Siliziumpartikel der Fig. 1c und
Fig. 3b eine Schnittansicht nach III-III der Fig. 3a.

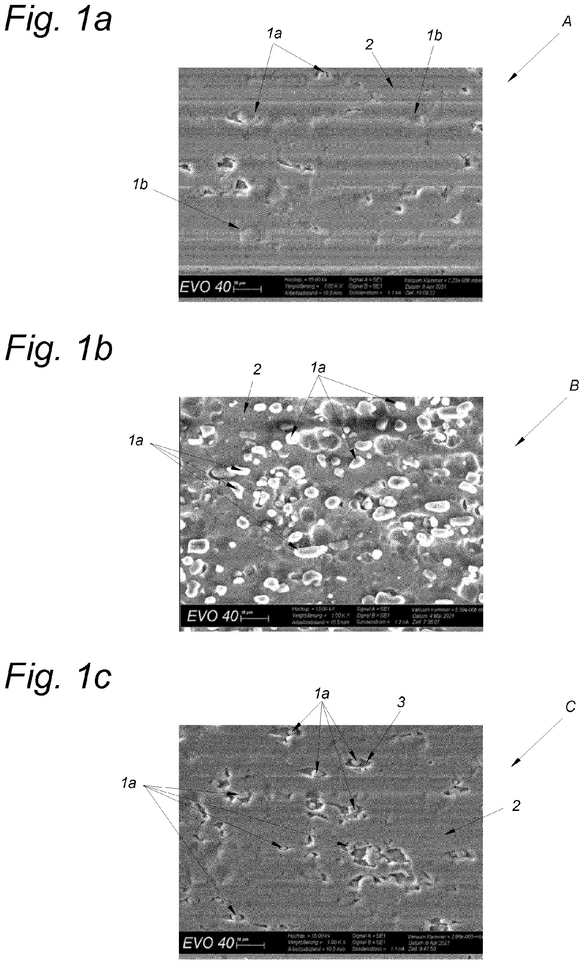

Die Figuren 1a bis 1f stellen Sekundärelektronenaufnahme von der Oberfläche des jeweiligen Verbundwerkstoffs gemessen mit einem Rasterelektronenmikroskop der Marke Zeiss Typ EVO 40 mit einer Beschleunigungsspannung von 15 kV und einem Arbeitsabstand von 10,5 mm dar.

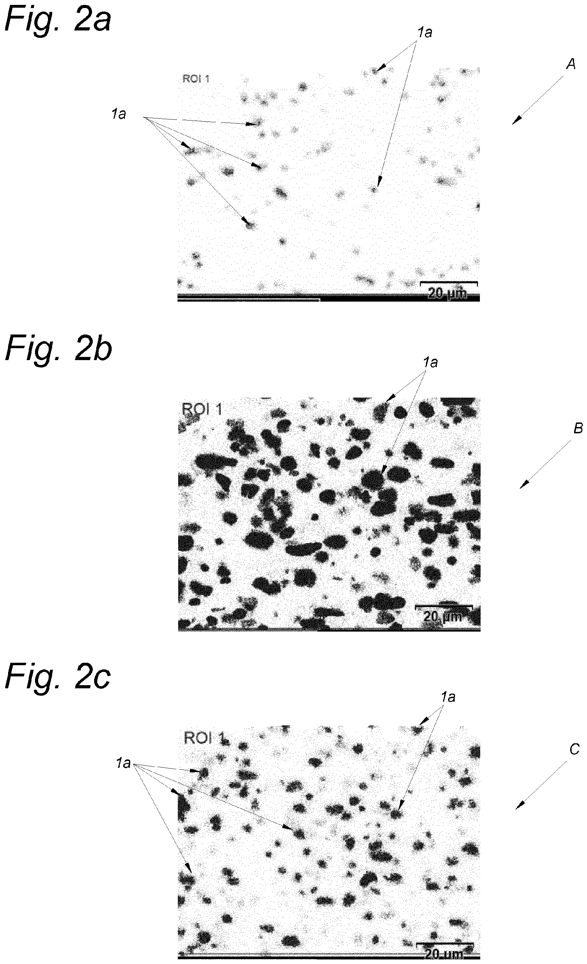

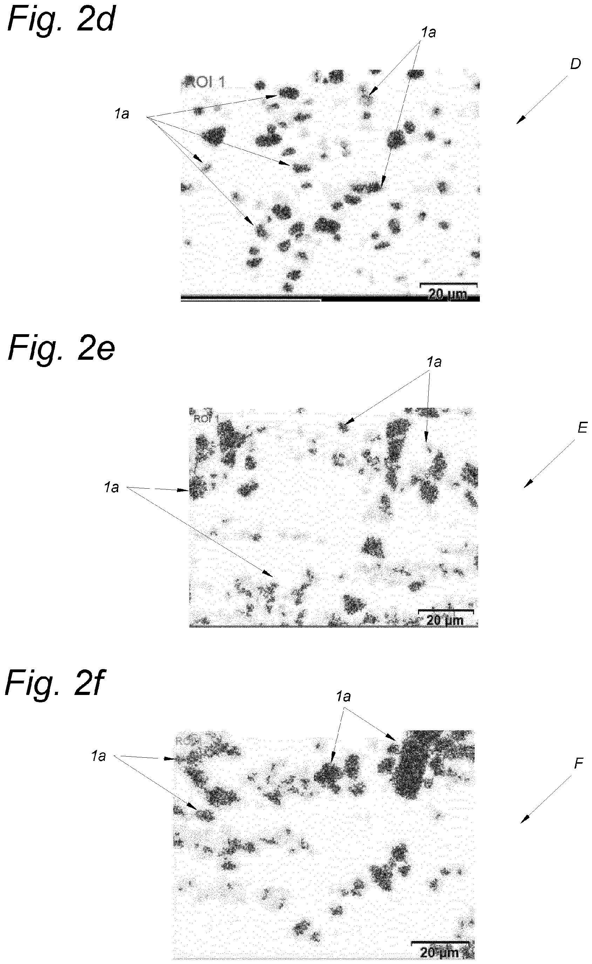

Bei den Figuren 2a bis 2f handelt es sich um ein Silizium-Mapping mit einer Auflösung von 512 x 384 Pixel, welches sich aus 25 Einzelbildern zusammensetzt. Aus diesen Figuren 2a bis 2f wurde der erste Flächenanteil der teilweise freiliegenden Siliziumpartikel mittels Software Olympus Stream, Phasenanalyse mit einem Schwellwert bei 160 bei den Figuren 2a bis 2d und mit einem Schwellwert bei 210 bei den Figuren 2e und 2f in der invertierten Darstellung ausgewertet.

Zum Nachweis der erzielten Effekte wurden sechs Verbundwerkstoffe A-F in Blechform, wobei aber auch ein Band (oftmals auch als Blechband bezeichnet) vorstellbar ist, durch beidseitiges Walzplattieren der Flachseiten einer Trägerschicht (oftmals auch Kernschicht genannt) mit einer Lotschicht erzeugt. Die Verbundwerkstoffe A-F stellen Lotwerkstoff dar. Die Materialdicke nach dem Walzplattieren beträgt beim Verbundwerkstoff A 1,5 mm (Millimeter), bei den Verbundwerkstoffen B und C 0,5 mm und bei den Verbundwerkstoffen D bis F 1,0 mm.

Die Trägerschichten der Verbundwerkstoffe A bis F weisen je eine Aluminiumknetlegierung mit

| | Mn Gew.-% | Cu Gew.-% | Si Gew.-% | Fe Gew.-% | Mg Gew.-% | Zn Gew.-% | Ti Gew.-% |
|---|---|---|---|---|---|---|---|
| A | 1,05 | 0,06 | 0,24 | 0,44 | 0,01 | 0,03 | 0,01 |
| B | 0,95 | 0,27 | 0,13 | 0,19 | 0,26 | 0,01 | 0,19 |
| C | 0,95 | 0,27 | 0,13 | 0,19 | 0,26 | 0,01 | 0,19 |
| D | 0,85 | 0,26 | 0,13 | 0,24 | 0,22 | 0,01 | 0,11 |
| E | 0,06 | 0,05 | 0,45 | 0,28 | 0,55 | 0,03 | 0,02 |
| F | 0,01 | 0,01 | 0,11 | 0,27 | 0,01 | 0,03 | 0,01 |

und als Rest Aluminium sowie herstellungsbedingt unvermeidbaren Verunreinigungen mit jeweils maximal 0,05 Gew.-% und gesamt höchstens 0,15 Gew.-% auf.

Die Lotschichten der Verbundwerkstoffe A bis F weisen eine Aluminiumlotlegierung mit

| | Si Gew.-% | Bi Gew.-% | Mg Gew.-% | Fe Gew.-% | Ti Gew.-% | Mn Gew.-% |
|---|---|---|---|---|---|---|
| A | 10,5 | - | 0,19 | 0,33 | - | 0,02 |
| B | 9,0 | 0,28 | 0,32 | 0,28 | 0,20 | 0,02 |
| C | 9,0 | 0,28 | 0,32 | 0,28 | 0,20 | 0,02 |
| D | 10,2 | 0,11 | 0,20 | 0,33 | 0,14 | 0,02 |
| E | 9,2 | 0,19 | 0,32 | 0,30 | 0,01 | 0,02 |
| F | 11,3 | 0,33 | 0,31 | 0,30 | 0,02 | 0,02 |

und als Rest Aluminium sowie herstellungsbedingt unvermeidbaren Verunreinigungen mit jeweils maximal 0,05 Gew.-% und gesamt höchstens 0,15 Gew.-% auf.

Verbundwerkstoff A:
Verbundwerkstoff A weist eine Trägerschicht aus einer Aluminiumlegierung vom Typ EN AW-3xxx und eine Lotschicht nach Tabelle 1 auf, die dem Typ EN AW-4xxx entspricht.
Fig. 1a zeigt eine Sekundärelektronenaufnahme von der Oberfläche des Verbundwerkstoffs A gemessen mit einem Rasterelektronenmikroskop der Marke Zeiss Typ EVO 40 mit einer Beschleunigungsspannung von 15 kV und einem Arbeitsabstand von 10,5 mm.
Nach Fig. 1a ist eine geringe Anzahl an Siliziumpartikel 1a an der Oberfläche des Verbundwerkstoffs A freigelegt, wie diese als hellgraue, abgerundete Flächen, umgeben von einem schwarzen Saum in Fig. 1a zu erkennen ist. Die Siliziumpartikel 1a sind von der Aluminiummatrix 2 umgeben. Einige Siliziumpartikel 1b scheinen durch die Oberfläche durch - liegen aber nicht frei an der Oberfläche. Fig. 2a verdeutlicht den ersten Flächenanteil der teilweise freiliegenden Siliziumpartikel 1a des Verbundwerkstoffs A. Der erste Flächenanteil liegt bei 0,4 %.

Verbundwerkstoff B:
Im Gegensatz zum Verbundwerkstoff A wurde der Verbundwerkstoff B nach dem letzten Kaltwalzstich im Kaltwalzen des Verbundwerkstoffs auf seine Enddicke einem alkalischen Beizen mit einem pH-Wert von 12,9, aufweisend eine Natriumlauge mit einer Konzentration von 12 Gew.-%, und einer Dauer von 75 s (Sekunden) unterworfen.
Fig. 1b zweigt eine Aufnahme der Oberfläche des Verbundwerkstoffs B. Eine hohe Anzahl an Siliziumpartikel 1a ist an der Oberfläche des Verbundwerkstoffs A freigelegt - wie an den hellen Flächen im Fig. 1b zu erkennen.
Fig. 2b verdeutlicht den ersten Flächenanteil der freiliegenden Siliziumpartikel 1a des Verbundwerkstoffs B. Der erste Flächenanteil liegt bei 24,3 %.

Verbundwerkstoff C (erfindungsgemäß):
Beim erfindungsgemäßen Verbundwerkstoff C wurde der zu Verbundwerkstoff B beschriebene alkalische Beizangriff auf die Oberfläche der Lotschicht - im Ausführungsbeispiel unmittelbar - vor dem letzten Kaltwalzstich im Kaltwalzen des Verbundwerkstoffs auf seine Enddicke durchgeführt.
Fig. 1c zeigt eine Aufnahme der Oberfläche des erfindungsgemäßen Verbundwerkstoffs C. Die Anzahl an Siliziumpartikel 1a, die an der Oberfläche des Verbundwerkstoffs C freiliegen, wie diese als hellgraue, abgerundete Flächen umgeben von einem schwarzen Saum in Fig. 1c zu erkennen ist, ist im Vergleich mit
Fig. 1a des Verbundwerkstoffs A erhöht. In Relation zum Verbundwerkstoff B ist diese Anzahl jedoch deutlich niedriger.
Fig. 2c verdeutlicht den ersten Flächenanteil der teilweise freiliegenden Siliziumpartikel 1a des Verbundwerkstoffs C. Der erste Flächenanteil liegt bei 7,2 %.

Verbundwerkstoff D (erfindungsgemäß):
Der erfindungsgemäße Verbundwerkstoff D wurde ebenfalls einem alkalischen Beizangriff auf der Oberfläche der Lotschicht - im Ausführungsbeispiel unmittelbar - vor dem letzten Kaltwalzstich im Kaltwalzen des Verbundwerkstoffs auf seine Enddicke unterzogen.

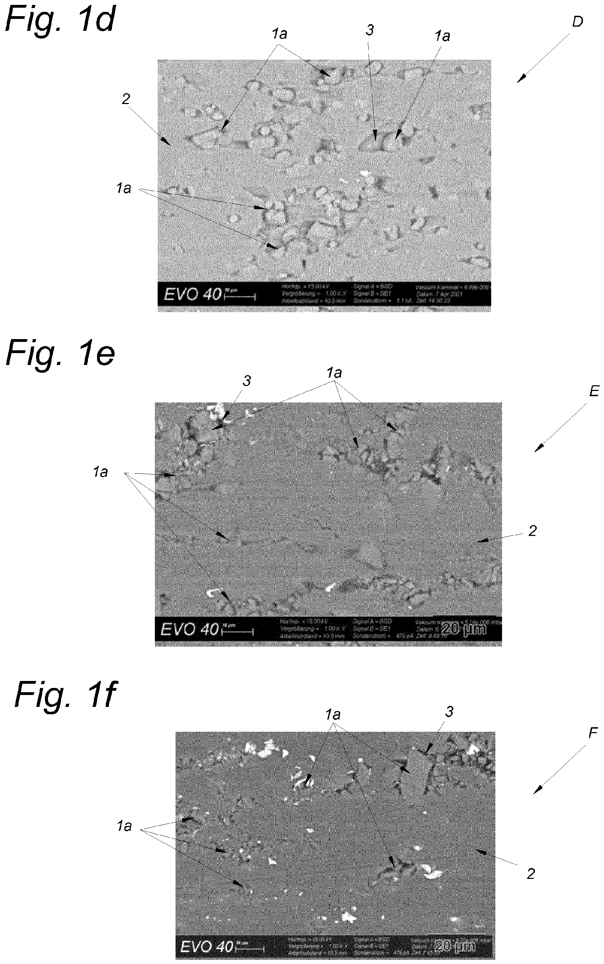

Fig. 1d zeigt eine Aufnahme der Oberfläche des erfindungsgemäßen Verbundwerkstoffs D. Die Anzahl an Siliziumpartikel 1a, die an der Oberfläche des Verbundwerkstoffs D freiliegen, wie diese als hellgraue, abgerundete Flächen umgeben von einem schwarzen Saum in Fig. 1d zu erkennen ist, ist im Vergleich mit
Fig. 1a des Verbundwerkstoffs A erhöht. In Relation zum Verbundwerkstoff C ist diese ähnlich.
Fig. 2d verdeutlicht den ersten Flächenanteil der teilweise freiliegenden Siliziumpartikel 1a des Verbundwerkstoffs C. Der erste Flächenanteil liegt bei 4,2 %.

Verbundwerkstoff E (erfindungsgemäß):
Der erfindungsgemäße Verbundwerkstoff E stellt einen Lotwerkstoff dar, welcher eine Trägerschicht aus einer Aluminiumlegierung vom Typ 6xxx und eine Lotschicht vom Typ 4xxx aufweist.
Verbundwerkstoff E wurde ebenfalls einem alkalischen Beizangriff auf der Oberfläche der Lotschicht - im Ausführungsbeispiel unmittelbar - vor dem letzten Kaltwalzstich im Kaltwalzen des Verbundwerkstoffs auf seine Enddicke unterzogen. Fig. 1e zeigt eine Aufnahme der Oberfläche des erfindungsgemäßen Verbundwerkstoffs E. Die Anzahl an Siliziumpartikel 1a, die an der Oberfläche des Verbundwerkstoffs E freiliegen, wie diese als hellgraue, abgerundete Flächen umgeben von einem schwarzen Saum in Fig. 1e zu erkennen ist, ist im Vergleich mit Fig. 1a des Verbundwerkstoffs A erhöht und ähnlich den Verbundwerkstoffen C und D ist, aber erheblich geringer als bei Verbundwerkstoff B.
Fig. 2e verdeutlicht den ersten Flächenanteil der teilweise freiliegenden Siliziumpartikel 1a des Verbundwerkstoffs E. Der erste Flächenanteil liegt bei 7 %.

Verbundwerkstoff F (erfindungsgemäß):
Der erfindungsgemäße Verbundwerkstoff F stellt einen Lotwerkstoff dar, welcher eine Trägerschicht aus einer Aluminiumlegierung vom Typ 1xxx und eine Lotschicht vom Typ 4xxx aufweist.
Verbundwerkstoff F wurde ebenfalls einem alkalischen Beizangriff an der Oberfläche der Lotschicht - im Ausführungsbeispiel unmittelbar - vor dem letzten Kaltwalzstich im Kaltwalzen des Verbundwerkstoffs auf seine Enddicke unterzogen. Fig. 1f zeigt eine Aufnahme der Oberfläche des erfindungsgemäßen Verbundwerkstoffs F. Die Anzahl an Siliziumpartikel 1a, die an der Oberfläche des Verbundwerkstoffs F freiliegen, wie diese als hellgraue, abgerundete Flächen umgeben von einem schwarzen Saum in Fig. 1f zu erkennen ist, ist im Vergleich mit Fig. 1a des Verbundwerkstoffs A erhöht und ähnlich zu den Verbundwerkstoffen C, D und E ist, aber erheblich geringer als bei Verbundwerkstoff B.
Fig. 2f verdeutlicht den ersten Flächenanteil der teilweise freiliegenden Siliziumpartikel 1a des Verbundwerkstoffs F. Der erste Flächenanteil liegt bei 8 %.

Von den blechförmigen Verbundwerkstoffen A bis F wurden mithilfe eines mechanischen Trennverfahrens, nämlich Stanzen, Blechteile abgetrennt. Des Weiteren wurden die Verbundwerkstoffe A bis F mit einem CAB-Lötverfahren ohne Flussmittel, also durch flussmittelfreies Löten mit einem weiteren Aluminiummaterial der Type 3003 unter Atmosphärendruck nach DIN ISO 2533 (1013,25 hPa) zusammengelötet.

Die Verbundwerkstoffe A bis F zeichnen sich durch folgende Eigenschaften aus:

**Tabelle 1: Messdaten**

| | Glanzwerte [GU] 60°, quer zur Walzrichtung | Si Partikel Flächenanteil [%] | Freiflächenverschleiß | flussm ittelfreies Löten |
|---|---|---|---|---|
| A | 103 | 0,4 | gering | **nicht** möglich |
| B | 25 | 24,3 | **hoch** | möglich |
| C | 86 | 7,2 | gering | möglich |
| D | 92 | 4,2 | gering | möglich |
| E | 79 | 7 | gering | möglich |
| F | 68 | 8 | gering | möglich |

Wie nach Tabelle 1 zu erkennen, ist Verbundwerkstoff A nicht flussmittelfrei mit einem CAB-Lötverfahren zu fügen.

Zwar ist ein flussmittelfreies Löten bei Verbundwerkstoff B möglich, jedoch zeigt sich nachteilig bei diesem Verbundwerkstoff B mit der gebeizten Oberfläche und den hervorstehenden Siliziumpartikeln 1a ein hoher Freiflächenverschleiß an einem Trenn- bzw. Umformwerkzeug, mit dem der Verbundwerkstoff B vor dem Fügen auf Maß bzw. in Form gebracht wird. Die Oberflächentopografie hat nämlich bei der Weiterverarbeitung des Lotmaterials erheblichen Einfluss auf die Reibverhältnisse und in weiterer Folge auch auf die Rückfederung bei der Umformung. Eine hohe Rückfederung nach der Umformung führt zu einer nicht unerheblich schlechten Maßtoleranz, welche zu Problemen bei der Verlötung in Bezug auf die Mindestspaltbreite führt. Hohe Oberflächenrauigkeiten wirken sich auch negativ auf die max. Umformbarkeit der Materialien aus, da sich der Schmierstoff nicht mehr gleichmäßig in der Kontaktzone der rauen Oberfläche verteilen kann. Der Freiflächenverschleiß entsteht vornehmlich durch Abrasion der Schneidkanten an den freilegenden Si-Partikeln der Lotschicht, welche Si-Partikel der Oberfläche der Aluminiummatrix aufgrund des Beizens erheblich vorstehen.

Zudem ist auch am Verbundwerkstoff B ein zu den anderen Verbundwerkstoffen niedriger Glanzwert 25 GU, gemessen in einem Winkel von 60° und quer zur Walzrichtung zu erkennen. Auch daran ist die negative Eigenschaft der Oberfläche des Verbundwerkstoffs B zu erkennen.

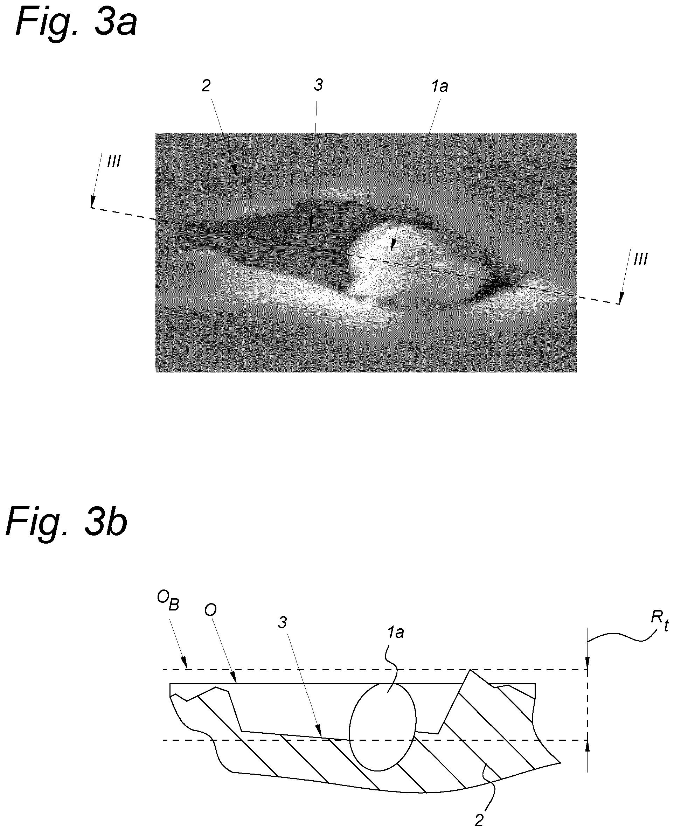

Bei den erfindungsgemäßen Verbundwerkstoffen C, D, E und F ist eine andere Oberfläche zu erkennen. Hier sind der Oberflächenkontur an der Aluminiummatrix vorspringende Si-Partikel nicht erkennbar - wie in Fig. 1c bis 1f zu sehen. Die Siliziumpartikel 1a sind in die Aluminiummatrix der Lotschicht aufgrund des Walzens, nämlich Kaltwalzens, eingedrückt und springen damit einem Bezugsprofil O_{B}, am Rauheitsprofil der gewalzten Oberfläche 0 der Lotschicht nicht vor. Dieses Bezugsprofil O_{B} bildet sich durch die Aluminiummatrix 2 der Lotschicht an der gewalzten Oberfläche aus, wie in Fig. 3b zu erkennen. Das Bezugsprofil O_{B} bildet sich durch die höchste Spitze am Rauheitsprofil der Aluminiummatrix 2. Beispielsweise ist vom Rauheitsprofil die maximalen Rautiefe Rt bzw. Rₘₐₓ der Verständlichkeit halber eingezeichnet. Damit reduziert sich der Freiflächenverschleiß von Werkzeugen erheblich und eine bessere Maßgenauigkeit der Umformteile, welche beim flussmittelfreien Löten erforderlich ist, stellt sich ein.

Auch ist bei den Siliziumpartikeln 1a eine Vertiefung 3 an der Oberfläche O der Lotschicht zu erkennen (vgl. Fig. 1c), die die eingedrückten Siliziumpartikel 1a zumindest bereichsweise umgibt. Die Vertiefung 3 ist in Walzrichtung gestreckt ausgebildet, was beispielsweise an der augenförmigen Grenzkontur in Fig. 1c zu erkennen ist. Die Siliziumpartikel 1a sitzen in dieser Vertiefung 3.

Diese nach Fig. 1c bis 1f eingedrückten Siliziumpartikel nehmen zudem auf den Glanz der Oberfläche keinen bis geringen Einfluss. Es ist daher bei den Verbundwerkstoffen C, D, E und F mit einem annähernd gleich hohen Glanzwert zu rechnen, wie sich dieser auch bei Verbundwerkstoff A zeigt - was auch in der Tabelle 1 zu erkennen ist. Im direkten Vergleich mit dem Verbundwerkstoff B weisen die Verbundwerkstoffe C, D, E und F jedoch deutlich höhere Glanzwert auf. In Tabelle 1 geht dieser Unterschied in den Glanzwerten zwischen dem nicht gebeizten Verbundwerkstoff A, dem ohne darauffolgende Kaltumformung gebeizten Verbundwerkstoff B und den vor dem letzten Kaltwalzschritt gebeizten Verbundwerkstoffen C, D, E und F eindeutig hervor. Auch ist dieser sehr deutlich in den Figuren 1a, 1b und 1c bis 1f zu erkennen. Dabei ist zu sehen, dass der erste Flächenanteil an freiliegenden Siliziumpartikeln durch das Beizen vor dem letzten Kaltwalzen erheblich erhöht wird - dies im Vergleich zu einem Material ohne Beizbehandlung, welches ebenfalls eingedrückte Siliziumpartikel, jedoch in weitaus geringerer Anzahl, an der Oberfläche zeigt.

Durch den Beizprozess wird die Aluminiummatrix, welche die Siliziumpartikel umgibt, aufgelöst, und die Siliziumpartikel bleiben an der Oberfläche zurück, wobei sich diese nun von der Matrix abheben.

Der Beizabtrag der Aluminiummatrix ist u. a. abhängig von der Temperatur, der Dauer und der Konzentration der Beizlösung und kann diesbezüglich ohne Weiteres äußerst flexibel eingestellt werden. Durch die nach dem Beizprozess durchgeführte Umformung des Materials durch Kaltwalzen werden die nach dem Beizen aus der Oberfläche herausstehenden Siliziumpartikel, aufgrund ihrer höheren Festigkeit im Vergleich zur Aluminiummatrix, in die Oberfläche (Aluminiummatrix) gedrückt. Dadurch wird die Anzahl der Siliziumpartikel an der Oberfläche erhöht und das Lotmaterial oberflächlich mit Silizium angereichert. Diese Anreicherung, die durch einen Walzprozess ohne eine zusätzliche Behandlung durch Beizen nicht realisierbar ist, führt zu einer Verbesserung der Verlötung in Verbindung mit Flussmitteln und einer Anwendung im flussmittelfreien Lötbereich bei gleichem Umformverhalten des Materials.

Die erfindungsgemäßen flussmittelfrei lötbaren Verbundwerkstoffe C, D, E und F sind daher verschleißarm mechanischen Trennverfahren, beispielsweise einem Stanzen, zuführbar und benötigt keine besonderen Maßnahmen bei der geometrischen Vorbereitung vor einem Fügeverfahren.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Verbundwerkstoff, insbesondere plattiertes Blech oder plattiertes Band, mit einer Trägerschicht aus einer Aluminiumknetlegierung und mit einer auf einer oder beiden Flachseiten der Trägerschicht vorgesehenen, außenliegenden Lotschicht aus einer Aluminiumlotlegierung, wobei die Lotschicht an ihrer Oberfläche (O) teilweise freiliegende Siliziumpartikel (1a) aufweist, die einen ersten Flächenanteil an der Gesamtfläche der Oberfläche (O) der Lotschicht ausbilden, **dadurch gekennzeichnet, dass** die Lotschicht eine gewalzte Oberfläche (O) und deren Aluminiumlotlegierung mindestens 0,1 Gew.-% Bismut (Bi) aufweisen, wobei der erste Flächenanteil größer 2,5 % ist.

2. Verbundwerkstoff nach Anspruch 1, **dadurch gekennzeichnet, dass** der erste Flächenanteil kleiner 25 %, insbesondere kleiner 20 % oder kleiner 12 %, ist.

3. Verbundwerkstoff nach Anspruch 1 oder 2, **dadurch gekennzeichnet, dass** der erste Flächenanteil im Bereich von 3 bis 10 % liegt.

4. Verbundwerkstoff nach Anspruch 1, 2 oder 3, **dadurch gekennzeichnet, dass** die Aluminiumlotlegierung bis zu 0,40 Gew.-% Bismut (Bi) aufweist.

5. Verbundwerkstoff nach einem der Ansprüche 1 bis 4, **dadurch gekennzeichnet, dass** die gewalzte Oberfläche (O) der Lotschicht einen Glanzwert gemäß DIN EN ISO 2813:2014 von mindestens 50 GU, bevorzugt größer als 60 GU, gemessen in einem Winkel von 60° und quer zur Walzrichtung, aufweist.

6. Verbundwerkstoff nach einem der Ansprüche 1 bis 5, **dadurch gekennzeichnet, dass** die gewalzte Oberfläche (O) in eine Aluminiummatrix der Lotschicht eingedrückte Siliziumpartikel (1a) aufweist.

7. Verbundwerkstoff nach einem der Ansprüche 1 bis 6, **dadurch gekennzeichnet, dass** die Aluminiummatrix der Lotschicht an der gewalzten Oberfläche (O) ein Bezugsprofil (O_{B}) am Rauheitsprofil der gewalzten Oberfläche (O) ausbildet, wobei die an der gewalzten Oberfläche (O) teilweise freiliegenden Siliziumpartikel (1a) diesem Bezugsprofil (O_{B}) nicht vorspringen.

8. Verbundwerkstoff nach einem der Ansprüche 1 bis 7, **dadurch gekennzeichnet, dass** sich die Siliziumpartikel (1a) in Vertiefungen (3) an der gewalzten Oberfläche (O) befinden.

9. Verbundwerkstoff nach einem der Ansprüche 1 bis 8, **dadurch gekennzeichnet, dass** die Aluminiumlotlegierung
| | |
|---|---|
| von 6,8 bis 13, insbesondere von 8,5 bis 12, | Gew.-% Silizium (Si), |
| von 0,1 bis 0,40, insbesondere von 0,1 bis 0,3, | Gew.-% Bismut (Bi), |
| von 0,10 bis 0,40, insbesondere von 0,2 bis 0,35, | Gew.-% Magnesium (Mg), |
optional einzeln oder in Kombination:
| | |
|---|---|
| bis 1,2, insbesondere bis 0,3, | Gew.-% Zink (Zn) |
| bis 0,6, insbesondere bis 0,5, | Gew.-% Eisen (Fe) |
| bis 0,2 | Gew.-% Titan (Ti) |
| bis 0,2, insbesondere bis 0,1, | Gew.-% Mangan (Mn) |
| bis 0,2, insbesondere bis 0,1, | Gew.-% Kupfer (Cu) |
| bis 0,03%, insbesondere bis 0,02%, | Gew.-% Strontium (Sr) |
| bis 0,2, insbesondere bis 0,1, | Gew.-% Zinn (Sn) |
| bis 0,2, insbesondere bis 0,1, | Gew.-% Antimon (Sb) |
und als Rest Aluminium sowie herstellungsbedingt unvermeidbare Verunreinigungen mit jeweils maximal 0,05 Gew.-% und gesamt höchstens 0,15 Gew.-% aufweist.

10. Verbundwerkstoff nach einem der Ansprüche 1 bis 9, **dadurch gekennzeichnet, dass** in der Aluminiumlotlegierung das Verhältnis der Gew.-% von Magnesium (Mg) zu Bismut (Bi) kleiner gleich 4 ist, insbesondere im Bereich von 0,5 bis 2,7 liegt.

11. Verbundwerkstoff nach einem der Ansprüche 1 bis 10, **dadurch gekennzeichnet, dass** die Aluminiumknetlegierung
| | |
|---|---|
| von 0 bis 1,6, insbesondere von 0,8 bis 1,4 | Gew.-% Mangan (Mn), |
| von 0 bis 0,90, insbesondere von 0,05 bis 0,6 | Gew.-% Kupfer (Cu), |
| von 0,05 bis 1,0, insbesondere von 0,05 bis 0,6 | Gew.-% Silizium (Si), |
optional einzeln oder in Kombination:
| | |
|---|---|
| bis 0,60, insbesondere bis 0,45, | Gew.-% Eisen (Fe) |
| bis 0,8, insbesondere bis 0,6, | Gew.-% Magnesium (Mg) |
| bis 0,15, insbesondere bis 0,10, | Gew.-% Zink (Zn) |
| bis 0,20 | Gew.-% Titan (Ti) |
und als Rest Aluminium sowie herstellungsbedingt unvermeidbare Verunreinigungen mit jeweils maximal 0,05 Gew.-% und gesamt höchstens 0,15 Gew.-% aufweist.

12. Verbundwerkstoff nach einem der Ansprüche 1 bis 11, **dadurch gekennzeichnet, dass** die Aluminiumknetlegierung vom Typ EN AW-1xxx, EN AW-3xxx, EN AW-5xxx oder EN AW-6xxx ist.

13. Verfahren zur Herstellung des Verbundwerkstoffs nach einem der Ansprüche 1 bis 12, bei dem der Verbundwerkstoff einem Kaltwalzen mit mindestens einem Kaltwalzstich unterworfen wird, wobei vor einem Kaltwalzstich des mindestens einen Kaltwalzstichs die Oberfläche (O) der Lotschicht einer Beizbehandlung mit einer, insbesondere alkalischen, Beize unterworfen wird.

14. Verfahren nach Anspruch 13, **dadurch gekennzeichnet, dass** die Beizbehandlung zwischen zwei Kaltwalzstichen des Kaltwalzens und/oder unmittelbar vor dem letzten Kaltwalzstich des Kaltwalzens erfolgt.

15. Verfahren nach Anspruch 13 oder 14, **dadurch gekennzeichnet, dass** eine Beize mit einem pH-Wert im Bereich von 11,0 bis 14,0, insbesondere im Bereich von 12 bis 13,5, verwendet wird und/oder dass die Beizdauer im Bereich von 15 bis 300, insbesondere von 30 bis 90, Sekunden liegt.

16. Verfahren nach einem der Ansprüche 13 bis 15, **dadurch gekennzeichnet, dass** die Beiztiefe im Bereich von 1 bis 7 µm liegt.

17. Verfahren nach einem der Ansprüche 13 bis 16, **dadurch gekennzeichnet, dass** die alkalische Beize eine Natriumlauge mit einer Konzentration im Bereich von 8 bis 16 % Gew.-% aufweist.

18. Verwendung eines, insbesondere nach dem Verfahren nach einem der Ansprüche 13 bis 17 hergestellten, Verbundwerkstoffs nach einem der Ansprüche 1 bis 12 zum flussmittelfreien, thermischen Fügeverfahren, insbesondere Löten, vorzugsweise unter Schutzgas, insbesondere unter Atmosphärendruck.
